# EUROPÄISCHE PATENTSCHRIFT

(11) **EP 1 092 342 B1**
(45) Veröffentlichungstag und Bekanntmachung des Hinweises auf die Patenterteilung: **28.01.2004**
(21) Anmeldenummer: 00119699.7
(22) Anmeldetag: 09.09.2000
(51) Int. Cl.: A01D 43/08

(54) **Schwenkeinrichtung für den Auswurfbogen von Feldhäckslern**
Pivoting device for the spout of forage harvesters
Dispositif de pivotement pour la goulotte d'éjection de faucheuse-hacheuse

(30) Priorität: 13.10.1999 DE 19949325
(43) Veröffentlichungstag der Anmeldung: 18.04.2001
(73) Patentinhaber: Case Harvesting Systems GmbH, 01844 Neustadt (DE)
(72) Erfinder: Friel, Holger, Dipl.-Ing., 19288 Glaisin (DE)
(74) Vertreter: Müller, Lutz

(56) Entgegenhaltungen:
- EP-A- 0 672 339
- DE-A- 3 801 343
- FR-A- 2 083 946
- US-A- 5 575 316

## Beschreibung

Die Erfindung betrifft eine Schwenkeinrichtung für den Auswurfbogen von Feldhäckslern zur Verarbeitung landwirtschaftlicher Erntegüter, forstwirtschaftlicher Kulturen sowie für sogenannte nachwachsende Rohstoffe, insbesondere nach den Merkmalen der Oberbegriffe des Patentanspruches 1 und des selbständigen Nebenanspruches 6.

Aus der Praxis sind Schwenkeinrichtungen für den Auswurfbogen von Feldhäckslern bekannt, bei denen die Schwenkbewegung des Auswurfbogens gegenüber dem feststehenden Auswurfschacht eines Wurfförderers oder der Häckseltrommel selbst durch einen Hydraulik- oder Elektromotor erzeugt wird, der ein Schneckengetriebe in Bewegung setzt, wobei dessen Zahnkranz dem schwenkbaren Auswurfbogen zugeordnet ist und die Schnecke am feststehenden Auswurfschacht gelagert ist. Das Schneckengetriebe befindet sich am Übergang vom Auswurfschacht zum Auswurfbogen. Mit derartigen Schwenkeinrichtungen lassen sich Auswurfbögen von einer in Fahrtrichtung gesehenen linksseitigen Position in eine nach hinten zeigende und auch in eine rechtsseitige Position und zurück verschwenken, so daß ein links bzw. rechts neben dem Feldhäcksler herfahrendes Transportmittel und auch ein von ihm gezogener Anhänger mit Erntegut befüllt werden kann.
Die meisten der heutigen Feldhäcksler sind als Selbstfahrer ausgebildet, die mit einer hohen Motorleistung ausgestattet sind und demzufolge auch eine hohe-Durchsatzleistung erreichen. Dadurch wird zwangsläufig zur Auslastung der zur Verfügung stehenden Motorleistung während des Ernteeinsatzes sowie auch bei Straßenfahrten oder Fahrten im Gelände mit einer relativ hohen Geschwindigkeit gefahren. Das birgt die Gefahr in sich, daß der Auswurfbogen durch seine abstehende Stellung mit irgendwelchen Hindernissen kollidiert und dabei beschädigt wird. Die gleiche Gefahr besteht natürlich auch für die Schwenkeinrichtung selbst. Aus diesem Grund gibt es Überlastsicherungen, die ungewollt auf den Auswurfbogen und dessen Schwenkeinrichtung ausgeübte hohe Verdrehkräfte von diesen fernhalten sollen.
Eine Ausführungsmöglichkeit einer derartigen Überlastsicherung ist in der EP 0 492 195 B 1 beschrieben, wo am Auswurfschacht eine Tragplatte befestigt ist, auf der ein Lagerbock um eine Achse um einen begrenzten Winkel verschwenkbar angeordnet ist. Auf dem Lagerbock ist die Antriebsschnecke eines Schneckengetriebes drehbar gelagert, die durch einen Hydraulikmotor angetrieben wird. Die Antriebsschnecke steht mit der Verzahnung des Drehkranzes am Auswurfbogen in antriebsmäßiger Verbindung, indem sie gemeinsam mit dem Lagerbock mit einer definierten Federkraft in dessen Verzahnung gezogen wird. Wenn nun einmal auf den Auswurfbogen und seine Schwenkeinrichtung durch Kollision hohe Verdrehkräfte ausgeübt werden, wird die Antriebsschnecke gegen die definierte Federkraft aus der Verzahnung des Drehkranzes herausgedrückt und in dieser entkuppelten Stellung mit einer Sperrklinke selbsttätig arretiert.
Nachteilig an dieser Schwenkeinrichtung ist, daß für die Überlastsicherung eine große Anzahl von Einzelteilen notwendig ist, die hohe Herstellungskosten verursachen. Durch das Herausdrücken der Antriebsschnecke aus der Verzahnumg im Überlastfall treten in dieser Paarung hohe Flächenpressungen auf, die zu einem vorzeitigen mechanischen Verschleiß dieser Teile führen. Außerdem sind noch die notwendigen Einstellarbeiten der Überlastsicherung bei der Erstmontage sowie die Arbeiten zum Aufheben der Arretierung nach dem Überlastfall zu bemängeln, weil das nur mit einem relativ hohen Zeitaufwand an dieser nicht ganz einfach zugänglichen Stelle erledigt werden kann. Schließlich ist die freie Verdrehmöglichkeit des Auswurfbogens nach dem Herausdrücken der Antriebsschnecke nicht ganz unproblematisch, weil er dann nach dem ersten Aufprall auf ein Hindernis zurückfedern und gegen ein anderes schlagen kann und danach zerstört wird.

Eine zweite Ausführungsmöglichkeit einer Überlastsicherung in der Schwenkeinrichtung eines Auswurfbogens ist mit der EP 0 672 339 A1 bekannt geworden, die mit der vorstehend beschriebenen weitestgehend übereinstimmt. Der einzige Unterschied besteht darin, daß der die Antriebsschnecke aufnehmende Lagerbock an der auch hier möglichen Verschwenkbarkeit im Überlastfall durch einen Scherstift gehindert wird, der im Überlastfall bricht und danach durch einen neuen ersetzt werden muß. Damit sind alle Nachteile der vorstehend beschriebenen Überlastsicherung auch für diese Ausführungsmöglichkeit vollinhaltlich gültig. Darüber hinaus ist jedoch noch zu bemängeln, daß Scherstifte aufgrund des Ermüdungsverhaltens bei dynamischer Belastung im Ansprechmoment zu stark streuen, so daß die Antriebsverbindung in der Schwenkeinrichtung entweder zu früh oder zu spät unterbrochen wird.

Schließlich ist noch mit der US-A-5575316 eine weitere Schwenkeinrichtung für den Auswurfbogen eines Feldhäckslers bekannt geworden, wobei ein in entgegengesetzten Drehrichtungen rotierender Hydraulikmotor ein Schnekkenritzel antreibt, das in die Verzahnung des Drehkranzes am Auswurfbogen zu dessen horizontalem Verschwenken eingreift. Am Auswurfbogen ist ein optischer oder akustischer Entfernungsmesser zur Vermessung eines neben dem Feldhäcksler herfahrenden Anhängers und zur Messung der Füllstandshöhe des sich im Anhänger befindenden Häckselgutes angebracht. Damit wird durch ein zielgenaues Verschwenken des Auswurfbogens und durch das Betätigen einer Auswurfklappe eine gleichmäßige und automatische Befüllung des Anhängers mit Häckselgut realisiert. Nachteilig an dieser Schwenkeinrichtung ist, daß sie keine Überlastsicherung besitzt, so daß im Falle der Kollision des Auswurfbogens mit einem Hindernis schwerste Schäden an ihm und seiner Schwenkeinrichtung einschließlich deren Antriebsmechanismus zu erwarten sind.

Deshalb liegt der Erfindung die Aufgabe zugrunde, eine Schwenkeinrichtung für den Auswurfbogen von Feldhäckslern zu schaffen, die mit geringen Kosten herstellbar ist, die im Überlastfall an den Teilen der Überlastsicherung keinen Verschleiß erzeugt, die nach dem Überlastfall ohne irgendwelche Einstellarbeiten sofort den Normalbetrieb wieder aufnehmen kann, die eine freie Verdrehmöglichkeit des Auswurfbogens im Überlastfall nicht zuläßt und deren Überlastsicherung ein exaktes und jederzeit reproduzierbares Ansprechmoment aufweist. Diese Aufgabe wird durch den Gegenstand des Patentanspruches 1 und des selbständigen Nebenanspruches 6 gelöst, wobei in den darauf rückbezogenen Unteransprüchen Merkmale aufgeführt sind, die die Erfindung in vorteilhafter Weise weiterentwickeln.
Durch die antriebsmäßige Verbindung des Hydraulikmotors mit einem Getriebe ohne Selbsthemmeffekt in beiden Drehrichtungen ist das Verschwenken des Auswurfbogens auf die linke und die rechte Seite des Feldhäckslers sowie nach hinten einschließlich aller Zwischenstellungen mit dem gleichen Antriebs-drehmoment möglich, wenn sich dem Auswurfbogen bei dieser Schwenkbewegung kein Hindernis in den Weg stellt. Dabei fließt das Hydrauliköl wie allgemein bekannt von der Hydraulikpumpe durch ein Wegeventil und die Zulaufleitung zum Hydraulikmotor und von da aus über die Rücklaufleitung durch das Wegeventil zurück in den Ölbehälter.

Kollidiert der Auswurfbogen jedoch beim Verschwenken mit einem Hindernis, bleibt der Hydraulikmotor stehen und das von der Hydraulikpumpe nachgeförderte Hydrauliköl wird über ein Druckbegrenzungsventil in die Leckölleitung und von dieser in den Ölbehälter geleitet. Dabei ist der Auswurfbogen lediglich einer gleichbleibend niedrigen Belastung ausgesetzt, die durch den eingestellten Druck am Druckbegrenzungsventil bestimmt ist.

Wenn in einem anderen Fall der Auswurfbogen mit einem Hindernis kollidiert, ohne daß gerade eine Schwenkbewegung ausgeführt wird, wird der Hydraulikmotor zur Hydraulikpumpe, der das Hydrauliköl durch die Zulauf- bzw. Rücklaufleitung durch das zugeordnete Druckbegrenzungsventil in die Leckölleitung drückt. Gleichzeitig saugt er über das Nachsaugventil die gleiche Menge Hydrauliköl aus der Leckölleitung zur Aufrechterhaltung des Kreislaufes gegen den am Druckbegrenzungsventil eingestellten Druck. Auch dann ist der Auswurfbogen nur den gleichbleibend niedrigen Belastungen wie im vorstehend beschriebenen Fall ausgesetzt.

In einer bevorzugten Ausführung nach den Merkmalen des Unteranspruches 3 hat es sich bewährt, jeweils ein Druckbegrenzungsventil und ein Nachsaugventil gemeinsam in einem Lastschaltventil unterzubringen und erfindungsgemäß einzusetzen.
Es bietet sich außerdem nach der Ausführung gemäß dem Unteranspruch 4 noch an, als Druckbegrenzungsventile sogenannte Schockventile zu verwenden, da diese im Ansprechverhalten außergewöhnlich schnell reagieren.
Für die Ausbildung des Getriebes der Antriebseinrichtung für die Schwenkeinrichtung hat es sich nach den Merkmalen des Unteranspruches 2 als zweckmäßig erwiesen, auf der Abtriebswelle des Hydraulikmotors ein Stirnradritzel zu befestigen, das mit einem am Umfang des Auswurfbogens befestigten Stirnrad im Eingriff steht, weil das in beide Drehrichtungen das gleiche Antriebsdrehmoment verlangt und eine Stirnverzahnung kostengünstig herstellbar ist.
In einer anderen Ausführungsvariante der Erfindung nach dem selbständigen Nebenanspruch 6 wird -für die nachfolgende Verwendung der Begriffe auf eine der möglichen Drehrichtungen bezogen- zwischen der dann als Zulaufleitung fungierenden Hydraulikölleitung und der als Rücklaufleitung fungierenden Hydraulikölleitung ein Druckbegrenzungsventil angeordnet, so daß das Hydrauliköl im Überlastfall gegen den an ihm eingestellten Druck von der Zulaufleitung zur Rücklaufleitung fließen kann. Ein weiteres Druckbegrenzungsventil befindet sich noch zwischen der Rücklaufleitung und der Zulaufleitung mit entgegengesetzter Durchflußrichtung, so daß das Hydrauliköl im Überlastfall auch von der Rücklaufleitung zur Zulaufleitung fließen kann, womit der Überlastschutz der Schwenkeinrichtung bei entgegengesetzter Drehrichtung des Hydraulikmotors bzw. bei einer Kollision des Auswurfbogens in entgegengesetzter Richtung gewährleistet ist. In letztgenanntem Fall wird logischer Weise die Rücklaufleitung zur Zulaufleitung und umgekehrt.

Auch in dieser geänderten Ausführungsvariante der Erfindung hat es sich bewährt, als Druckbegrenzungsventile sogenannte Lastschaltventile mit ihren bekannten Vorteilen einzusetzen.
Vorsorglich wird noch darauf hingewiesen, daß der Rahmen der Erfindung auch dann nicht verlassen wird, wenn mit dem Fachmann bekannten anderen Schaltplänen die hydraulische Überlastsicherung nach dem erfindungsgemäßen Grundgedanken verwirklicht wurde, selbst wenn sie hier nicht im einzelnen erläutert worden sind.
Damit sind die Vorteile der erfindungsgemäßen Schwenkeinrichtung, daß sie kostengünstig herstellbar ist, da der zusätzliche bauliche Aufwand für die Überlastsicherung äußerst gering ist. Im Überlastfall spricht lediglich das Druckbegrenzungsventil an, so daß es dadurch keinen Verschleiß an der Schwenkeinrichtung gibt. Es bedarf auch keiner zeitaufwendigen Einstellarbeiten für die Schwenkeinrichtung, um nach dem Überlastfall wieder in den Normalbetrieb überzugehen. Des weiteren wird der Auswurfbogen im Zustand der Überlastung bzw.einer Kollision immer sanft festgehalten, so daß keine Folgeschäden eintreten können. Schließlich ist noch das exakte und jederzeit reproduzierbare Ansprechmoment der Überlastsicherung zu erwähnen, wodurch deren zu frühes und zu spätes Ansprechen vermieden wird und darauf zurückzuführende Beschädigungen ausbleiben.

Die Erfindung soll nun anhand von zwei Ausführungsbeispielen näher erläutert werden, wobei die einzelnen Figuren zeigen:
- Fig. 1:: eine perspektivische Ansicht auf das Endstück eines Auswurfschachtes und das sich daran anschließende Unterteil eines Auswurfbogens
- Fig. 2:: ein hydraulischer Schaltplan zum Antrieb des Hydraulikmotors für die Schwenkeinrichtung mit dem Hydraulikölfluß beim Verschwenken des Auswurfbogens ohne ein Hindernis
- Fig. 3:: ein hydraulischer Schaltplan nach Fig. 2 mit dem Hydraulikölfluß beim Verschwenken des Auswurfbogens bei dessen Kollision mit einem Hindernis
- Fig. 4:: ein hydraulischer Schaltplan nach Fig. 2 mit dem Hydraulikölfluß beim Kollidieren des Auswurfbogens mit einem Hindernis ohne ein Verschwenken des Auswurfbogens
- Fig. 5:: ein hydraulischer Schaltplan eines Lastschaltventiles
- Fig. 6:: ein hydraulischer Schaltplan zum Antrieb des Hydraulikmotors in einem zweiten Ausführungsbeispiel

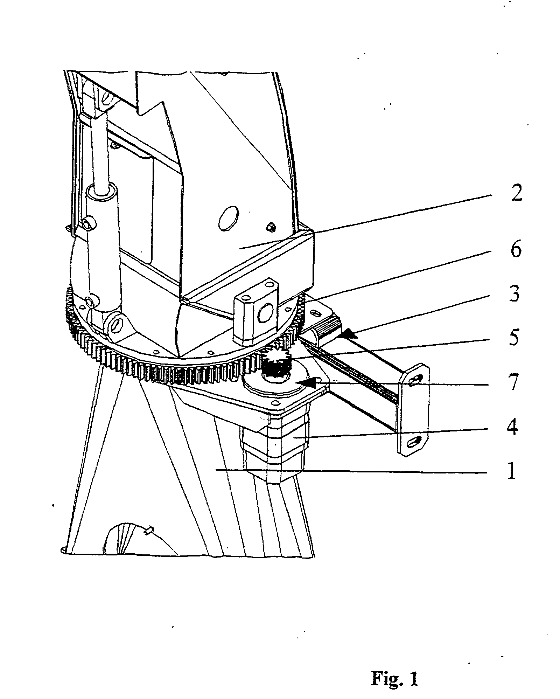

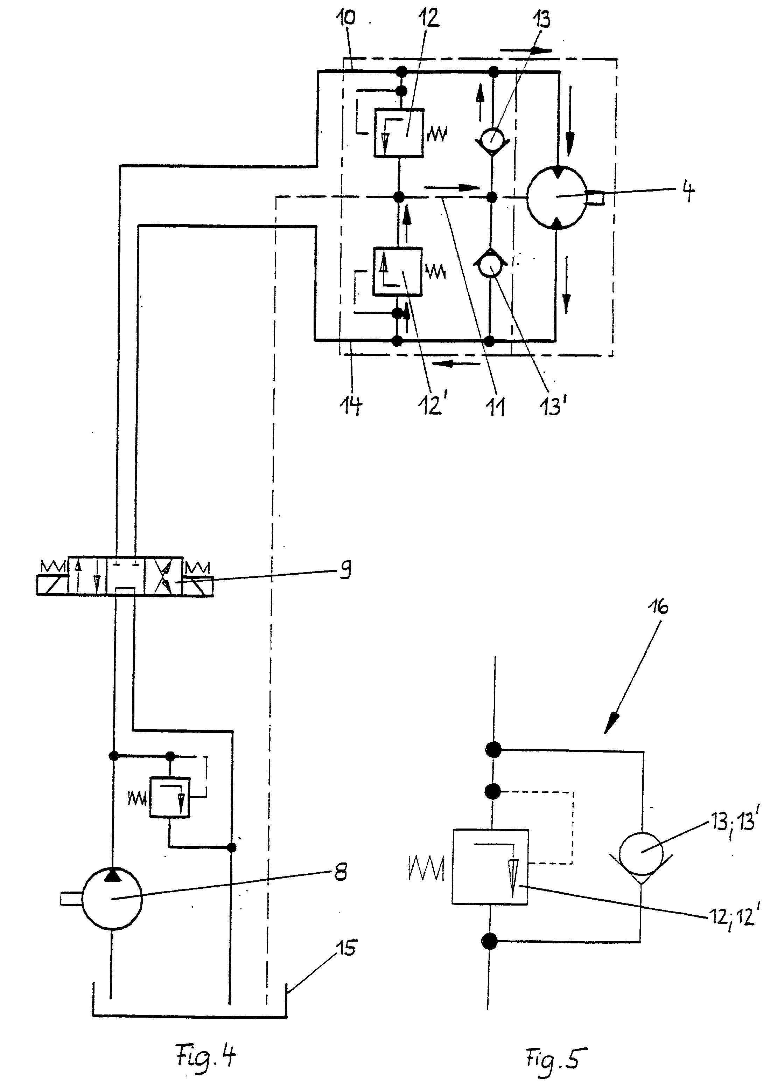

In Figur 1 ist das obere Ende eines Auswurfschachtes 1 eines Feldhäckslers zu sehen, auf dem das untere Ende eines Auswurfbogens 2 drehbar gelagert ist, so daß er um die annähernd vertikal ausgerichtete Mittelachse des im Feldhäcksler feststehend angeordneten Auswurfschachtes 1 verschwenkbar ist. Die dazu notwendige Schwenkeinrichtung hat hierfür eine Antriebseinrichtung 3 mit einem Hydraulikmotor 4, auf dessen nach oben zeigender Abtriebswelle ein Stirnradritzel 5 befestigt ist. Dieses Stirnradritzel 5 steht mit einem am Umfang des Auswurfbogens 2 drehfest angebrachten Stirnrad 6 im Eingriff, so daß sie gemeinsam das Getriebe 7 der Antriebseinrichtung 3 bilden.

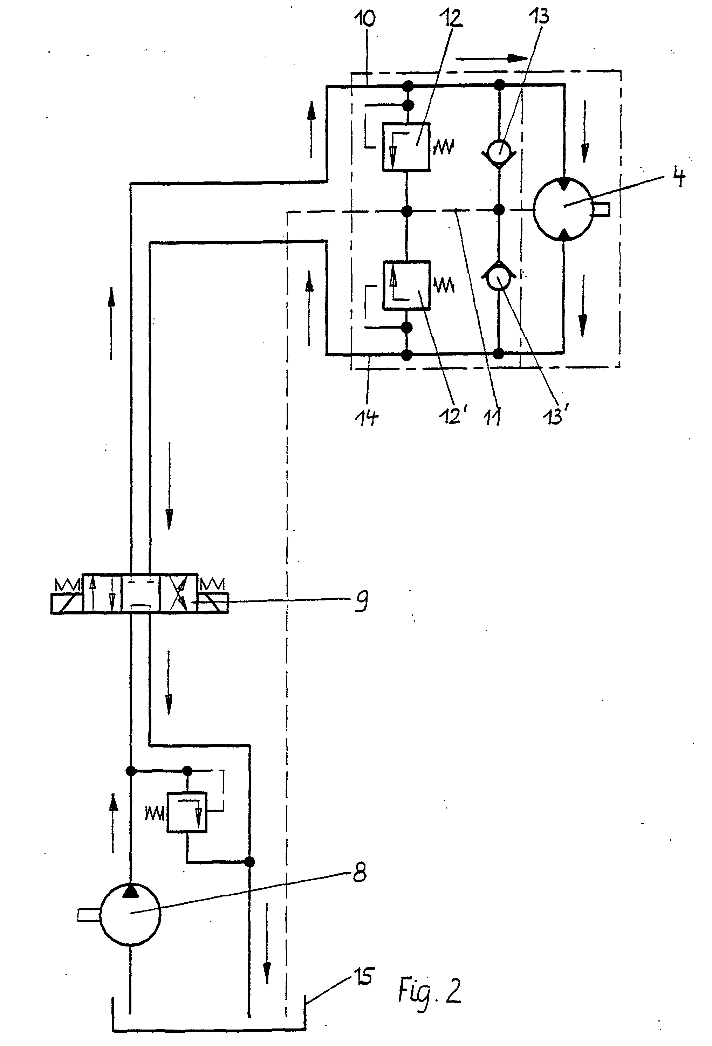

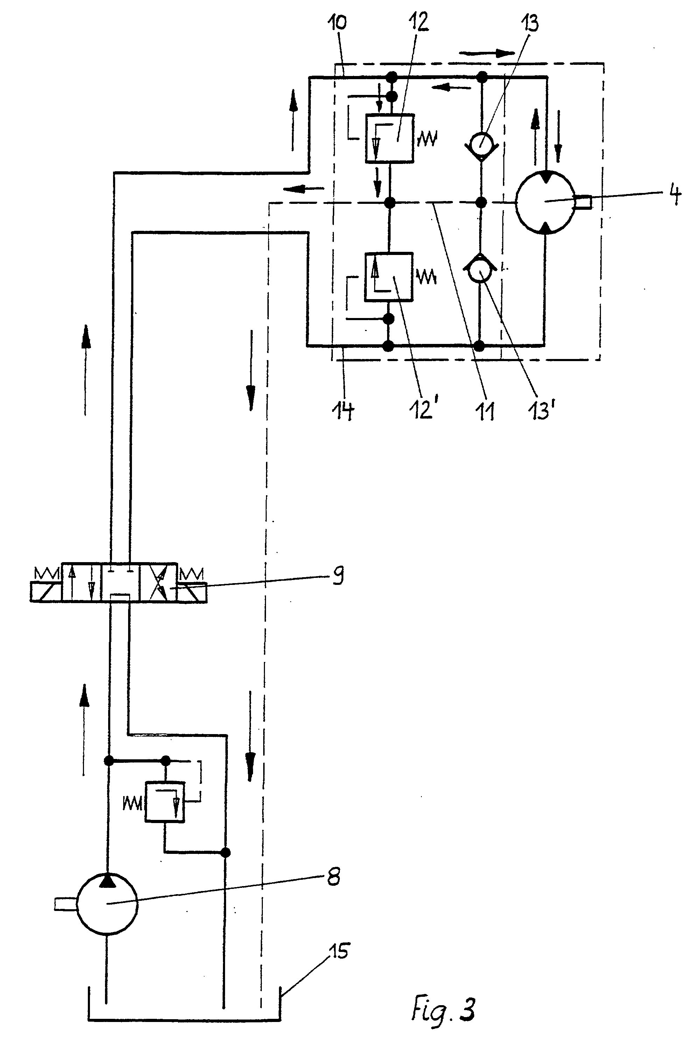

In den Figuren 2 bis 4 sind für das erste Ausführungsbeispiel der Erfindung die hydraulischen Schaltpläne für den Antrieb des Hydraulikmotors 4 mit dem dazugehörigen Hydraulikölfluß für die in den vorstehenden Erläuterungen genannten Schwenkmöglichkeiten des Auswurfbogens 2 gezeigt. Deren völlig identischer Grundaufbau besteht aus einer Hydraulikpumpe 8, die leitungsseitig mit einem Wegeventil 9 verbunden ist. Vom Wegeventil 9 führt aus der Sicht der einen von den beiden möglichen Drehrichtungen eine Zulaufleitung 10 zum Hydraulikmotor 4. Zwischen der Zulaufleitung 10 und der Leckölleitung 11 sind ein Druckbegrenzungsventil 12 und ein Nachsaugventil 13 angeordnet. In dieser Reihenfolge nach dem Hydraulikmotor 4 schließt sich an ihn die Rücklaufleitung 14 an, die zum Wegeventil 9 führt und nach diesem im Ölbehälter 15 endet. Auch die Rücklaufleitung 14 ist mit der Leckölleitung 11 über ein Druckbegrenzungsventil 12' und ein Nachsaugventil 13' verbunden, da diese im Falle der Drehrichtungsumkehr des Hydraulikmotors 4 selbst zur Zulaufleitung 10 wird und die bisherige Zulaufleitung 10 demzufolge zur Rücklaufleitung 14.
Mit Figur 5 soll darauf verwiesen werden, daß das Druckbegrenzungsventil 12;12' und das Nachsaugventil 13;13' auch gemeinsam in einem dem Fachmann geläufigen Lastschaltventil 16 untergebracht sein können.

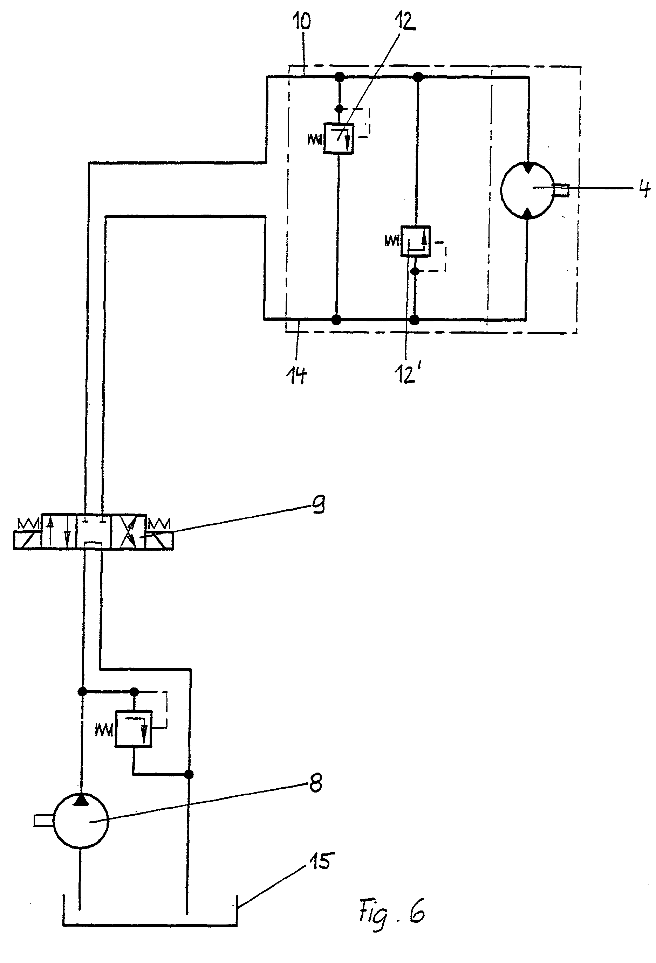

In Figur 6 ist das zweite Ausführungsbeispiel eines hydraulischen Schaltplanes zum Antrieb des Hydraulikmotors 4 zu sehen, bei dem zwischen der Zulaufleitung 10 und der Rücklaufleitung 14 ein den Durchfluß des Hydrauliköles in dieser Richtung gestattendes Druckbegrenzungsventil 12 angeordnet ist. Ein den Durchfluß des Hydrauliköles in der entgegengesetzten Richtung gestattendes Druckbegrenzungsventil 12' befindet sich zwischen der Rücklaufleitung 14 und der Zulaufleitung 10. Der Rest dieses Schaltplanes stimmt mit denen in den Figuren 2 bis 4 überein.

### Bezugszeichenaufstellung

- 1: Auswurfschacht
- 2: Auswurfbogen
- 3: Antriebseinrichtung
- 4: Hydraulikmotor
- 5: Stirnradritzel
- 6: Stirnrad
- 7: Getriebe
- 8: Hydraulikpumpe
- 9: Wegeventil
- 10: Zulaufleitung
- 11: Leckölleitung
- 12;12': Druckbegrenzungsventil
- 13;13': Nachsaugventil
- 14: Rücklaufleitung
- 15: Ölbehälter
- 16: Lastschaltventil

## Patentansprüche

1. Schwenkeinrichtung für den Auswurfbogen (2) eines Feldhäckslers, mit einem dem Häckselaggregat nachgeordneten Auswurfschacht (1), einem mit dem Auswurfschacht ( 1 ) verbundenen Auswurfbogen (2) für das Häckselgut und einer Antriebseinrichtung (3), bestehend aus einem in entgegengesetzten Drehrichtungen antreibbaren und mit einem Getriebe (7) in antriebsmäßiger Verbindung stehenden Hydraulikmotor (4), womit der Auswurfbogen (2) relativ zum Auswurfschacht ( 1 ) verschwenkbar ist,
**dadurch gekennzeichnet, daß**
a) das Getriebe (7) in keiner der beiden möglichen Drehrichtungen einen Selbsthemmeffekt aufweist,
b) sowohl zwischen der Zulaufleitung (10) und der Leckölleitung (11) des Hydraulikmotors (4) als auch zwischen der Rücklaufleitung (14) und der Leckölleitung (11) ein Druckbegrenzungsventil (12;12') und ein Nachsaugventil (13;13') angeordnet sind.

2. Schwenkeinrichtung nach Anspruch 1, **dadurch gekennzeichnet, daß** das zur Antriebseinrichtung (3) für den Auswurfbogen (2) dienende Getriebe (7) aus einem mit der Abtriebswelle des Hydraulikmotors (4) verbundenen Stimradritzel (5) besteht, das mit einem mit dem Auswurfbogen (2) drehfest verbundenen Stirnrad (6) in antriebsmäßiger Verbindung steht.

3. Schwenkeinrichtung nach den Ansprüchen 1 bis 2, **dadurch gekennzeichnet, daß** jeweils ein Druckbegrenzungsventil (12;12') und ein Nachsaugventil (13;13') gemeinsam ein Lastschaltventil (16) bilden.

4. Schwenkeinrichtung nach einem oder mehreren der Ansprüche 1 bis 3, **dadurch gekennzeichnet, daß** die Druckbegrenzungsventile (12;12') als Schockventile ausgebildet sind.

5. Schwenkeinrichtung nach einem oder mehreren der Ansprüche 1 bis 4, **dadurch gekennzeichnet, daß** die Zulaufleitung (10) und die Rücklaufleitung (14) des Hydraulikmotors (4) über ein Wegeventil (9) mit der Hydraulikpumpe (8) verbunden sind.

6. Schwenkeinrichtung für den Auswurfbogen (2) eines Feldhäckslers, mit einem dem Häckselaggregat nachgeordneten Auswurfschacht ( 1 ), einem mit dem Auswurfschacht (1) verbundenen Auswurfbogen (2) für das Häckselgut und einer Antriebseinrichtung (3), bestehend aus einem in entgegengesetzten Drehrichtungen antreibbaren und mit einem Getriebe (7) in antriebsmäßiger Verbindung stehenden Hydraulikmotor (4), womit der Auswurfbogen (2) relativ zum Auswurfschacht ( 1 ) verschwenkbar ist,
**dadurch gekennzeichnet, daß**
a) das Getriebe (7) in keiner der beiden möglichen Drehrichtungen einen Selbsthemmeffekt aufweist,
b) auf eine der beiden möglichen Drehrichtungen des Hydraulikmotors (4) bezogen zwischen seiner Zulaufleitung (10) und der Rücklaufleitung (14) ein Druckbegrenzungsventil (12) und zwischen der Rücklaufleitung (14) und der Zulaufleitung (10) ein weiteres Druckbegrenzungsventil (12') angeordnet sind.

7. Schwenkeinrichtung nach Anspruch 6, **dadurch gekennzeichnet, daß** die Druckbegrenzungsventile (12;12') als Lastschaltventile (16) ausgebildet sind.

## Claims

1. A swivelling device for the discharge pipe (2) of a forage chopper, with a discharge shaft (1) arranged on the chopper unit, a discharge pipe (2) for the chopped material connected to the discharge shaft (1) and a drive device (3), consisting of a hydraulic motor (4) drivable in opposite directions of rotation and a gear box (7), with which the discharge pipe (2) is swivelable relative to the discharge shaft (1).
**characterised in that**
a) the gear box (7) does not have a self-inhibiting effect in either of the possible rotational directions,
b) both between the inlet pipe (10) and the overflow oil line (11) of the hydraulic motor (4) and also between the return flow pipe (14) and the overflow oil line (11) a pressure-limiting valve (12;12') and a check valve (13;13') are arranged.

2. A swivelling device in accordance with claim 1, **characterised in that**, the gearbox (7) serving for the drive device (3) for the discharge pipe (2) consists of a spur gear pinion (5) connected to the drive shaft of the hydraulic motor (4), which drives a spur wheel (6) which is rigidly fixed to the discharge pipe (2).

3. A swivelling device in accordance with claims 1 to 2, **characterised in that**, each time a pressure-limiting valve (12;12') and a check valve (13;13') are formed together in a load-switching valve (16).

4. A swivelling device in accordance with one or more of the claims 1 to 3, **characterised in that**, the pressure-limiting valves (12;12') are formed as shock valves.

5. A swivelling device in accordance with one or more of the claims 1 to 4, **characterised in that**, the inlet pipe (10) and the return flow pipe (14) of the hydraulic motor (4) are connected with the hydraulic pump (8) via a directional control valve (9).

6. A swivelling device for the discharge pipe (2) of a forage chopper, with a discharge shaft (1) arranged on the chopper unit, a discharge pipe (2) for the chopped material connected to the discharge shaft (1) and a drive device (3), consisting of a hydraulic motor (4) drivable in opposite directions of rotation and a gear box (7), with which the discharge pipe (2) is swivelable relative to the discharge shaft (1).
**characterised in that**
a) the gear box (7) does not have a self-inhibiting effect in either of the possible rotational directions,
b) for one of the two possible directions of rotation of the hydraulic motor (4) between its inlet pipe (10) and the return flow pipe (14) one pressure-limiting valve (12) and between the return flow pipe (14) and the inlet pipe (10) a further pressure-limiting valve (12') is arranged.

7. A swivelling device in accordance with claim 6, **characterised in that**, the pressure-limiting valves (12;12') are formed as load switching valves (16).

## Revendications

1. Dispositif de pivotement pour la goulotte (2) d'une récolteuse-hacheuse-chargeuse, avec une tuyère d'éjection (1) en aval du groupe hacheur, (1), une goulotte (2) reliée à la tuyère d'éjection (1) pour les produits hachés et un dispositif de commande (3), constitué d'un moteur hydraulique (4) qui peut être commandé dans des sens de rotation opposés et être en relation de commande avec un engrenage (7), la goulotte (2) étant pivotable relativement à la tuyère d'éjection (1),
**caractérisé en ce que**
a) l'engrenage (7) ne présente aucun effet autobloquant dans les deux sens de rotation possibles,
b) une soupape de limitation de pression (12;12') et une soupape de postaspiration (13;13') sont disposées aussi bien entre la conduite d'arrivée (10) et la conduite de retour des injecteurs (11) du moteur hydraulique (4) qu'entre la conduite de retour (14) et la conduite de retour des injecteurs (11).

2. Dispositif de pivotement selon la revendication 1, **caractérisé en ce que** l'engrenage (7) servant de dispositif de commande (3) pour la goulotte (2) est constitué d'un pignon droit (5) relié avec l'arbre de sortie du moteur hydraulique (4), pignon qui est en relation de commande avec une roue droite (6) liée à demeure à la goulotte (2).

3. Dispositif de pivotement selon les revendications 1 à 2, **caractérisé en ce qu'**une soupape de limitation de pression (12;12') et une soupape de postaspiration (13;13') forment ensemble une soupape de coupure en charge (16).

4. Dispositif de pivotement selon une ou plusieurs des revendications 1 à 3, **caractérisé en ce que** les soupapes de limitation de pression (12;12') ont la forme de soupapes de choc.

5. Dispositif de pivotement selon une ou plusieurs des revendications 1 à 4, **caractérisé en ce que** la conduite d'amenée (10) et la conduite de retour (14) du moteur hydraulique (4) sont reliées avec la pompe hydraulique (8) par un distributeur (9).

6. Dispositif de pivotement pour la goulotte (2) d'une récolteuse-hacheuse-chargeuse, avec une tuyère d'éjection (1) en aval du groupe hacheur, (1), une goulotte (2) reliée à la tuyère d'éjection (1) pour les produits hachés et un dispositif de commande (3), constitué d'un moteur hydraulique (4) qui peut être commandé dans des sens de rotation opposés et être en relation de commande avec un engrenage (7), la goulotte (2) étant pivotable relativement à la tuyère d'éjection (1),
**caractérisé en ce que**
l'engrenage (7) ne présente aucun effet autobloquant dans les deux sens de rotation possibles,
a) l'engrenage (7) ne présente aucun effet autobloquant dans les deux sens de rotation possibles,
b) une soupape de limitation de pression (12) est disposée entre sa conduite d'amenée (10) et sa conduite de retour (14) et une autre soupape de limitation de pression (12') est disposée entre la conduite de retour (14) et la conduite d'amenée (10) par rapport à l'un des deux sens de rotation possibles du moteur hydraulique (4).

7. Dispositif de pivotement selon la revendication 6, **caractérisé en ce que** les soupapes de limitation de pression (12;12') ont la forme de soupapes de coupure en charge (16).
